# EUROPEAN PATENT SPECIFICATION

(11) **EP 2 963 748 B1**
(45) Date of publication and mention of the grant of the patent: **19.08.2020**
(21) Application number: 15171306.2
(22) Date of filing: 10.06.2015
(51) Int. Cl.: H02G 3/04

(54) **FASTENER FOR COUPLING A HOUSING ON A CORRUGATED TUBE AND CORRESPONDING ASSEMBLY**
BEFESTIGUNGSMITTEL ZUR VERBINDUNG EINES GEHÄUSES AUF EINEM WELLROHR UND ENTSPRECHENDE ANORDNUNG
FIXATION POUR COUPLER UN LOGEMENT SUR LE TUBE ONDULÉ ET ASSEMBLAGE CORRESPONDANT

(30) Priority: 24.06.2014 EP 14173770
(43) Date of publication of application: 06.01.2016
(60) Divisional application: 19159971.1
(73) Proprietor: TE Connectivity Nederland B.V., 5222 AR's-Hertogenbosch (NL)
(72) Inventor: Dieduksman, Andreas Winandus, 5237 HV s'Hertogenbosch (NL); Drijfhout, Tekke, 5388 CG Nistelrode (NL)
(74) Representative: Grünecker Patent- und Rechtsanwälte PartG mbB

(56) References cited:
- EP-A1- 1 244 190
- JP-A- 2005 026 048
- US-A1- 2008 277 015

## Description

The present invention relates to a fastener for coupling a housing, such as a connector housing or an adapter housing of a connector, on a corrugated tube, said fastener comprising a fastener body, a coupler for attaching the body to the housing, and at least one body retainer that can be inserted into a corrugation of the tube for fixing the body in the axial direction on the tube.

The present invention furthermore relates to an assembly for sealingly coupling a housing, such as a connector or adapter housing of a connector, on a corrugated tube comprising a fastener for coupling a housing on a corrugated tube and at least one of a sealing element for sealing a corrugated tube against a housing, such as a connector housing or an adapter housing of a connector, said sealing element comprising a sealing sleeve having a passage extending in an axial direction of the sleeve for receiving a part of the tube, and a corrugated tube for protecting a cable, comprising a plurality of corrugations on the outside of the tube.

Connectors are commonly used to protect cables and cable connectors against harmful environmental impacts, such as shock, dirt, strain, moisture or other corrosive substances. Such connectors are fastened on a protective tube, in which a part of the cable, i.e. a data and/or power transmission line, is received. The connector housing or shell to which the tube is fastened is also used to attach the connector tube to e.g. the box of a field installation, such as for example a data transmitter. The other end of the tube may likewise be fastened on a connector housing, or with an adapter housing by means of which the housing can be fixed on the cable.

Where the connector/adapter housing is connected to the tube, water or other contaminants may enter the tube, damaging the cable placed inside. Further, a firm connection between the tube and the housings, in particular in the axial direction (also referred to as the longitudinal direction) of the tube is required to withstand hazardous environments. In particular, strain along the axial direction of the tube may damage the connector and/or the cable inside, for example due to undesired elongation of the corrugated tube in the longitudinal direction or detachment of the housing from the tube.

JP 2005 026048 A discloses an electric wire cover for covering an electric wire group extended from a housing. The wire cover is provided with a first holding part and a second holding part for holding a corrugate tube by fitting them to each other so that a bellows-like corrugate tube, in which the electric wire group passes through, is pinched in the radial direction.

Improvements in the sealing and fastening of housings on corrugated tubes as well as the robustness of a tube connection are thus required.

In view of the above requirements for a connector, it is an object of the present invention to provide a fastener, a sealing element and corrugated tube, for sealingly coupling a housing on a corrugated tube in a strain-resistant manner.

The fastener of the present invention solves this problem in that the fastener comprises at least two body parts that can be assembled to the fastener body, wherein each body part may comprise a coupler and a retainer. A fastener comprising body parts facilitates the mounting of the body on the corrugated tube in a custom-fitting manner using a body cross-section that is adapted to the outer contour of the corrugated tube. Since the body, composed of at least two body parts, can be assembled on the tube, there is no need to push the tube through the transit of the body, which may damage the tube and/or the fastener. Providing each body part with a coupler and a retainer improves the total number of couplers and retainers of the fastener according to the present invention and allowing the couplers and retainers to be evenly distributed around the longitudinal axis.

The assembly for sealingly coupling a housing on a corrugated tube solves the above-mentioned problem by comprising a fastener according to the present invention and at least one of:
- a sealing element for sealing a corrugated tube against a housing, such as a connector housing or an adapter housing, comprising a sealing sleeve having a passage extending in an axial direction of the sealing sleeve for receiving a part of the tube and a seal retainer that can be inserted into a corrugation of the tube for fixing the sealing element in the axial direction on the tube and
- a corrugated tube for protecting a cable, comprising a plurality of corrugations on the outside of the tube, and a reinforcement element stiffening the tube in its axial direction.

The inventive solution has the advantage that the housing can be sealingly and securely coupled on a corrugated tube. The assembly may be variably used for any kind of cable/cable connection and is easy to assemble by fixing the sealings on the respective ends of the strain-resistant corrugated tube of the present invention, fixing the fastener according to the present invention and then coupling the housing via the fastener on the sealing element, which can be done *in situ,* i.e. in the field, so the present invention allows the field-assembly and installation of the connector. However, in situ field-assembly is not mandatory. Likewise, a pre-assembled finished enclosure of a housing that is sealing coupled on a corrugated tube may be used. By inserting the body/seal retainer into a corrugation of the tube, the retainer engages the corrugation, thus abutting the corrugation in the axial direction and this way preventing detachment of the fastener/sealing element from the corrugated tube in case someone pulls on the tube, i.e. applies a strain in the axial direction along the tube.

The corrugated tube of the present invention solves the above-cited problem by comprising a reinforcement element stiffening the tube in its axial direction. The reinforcement element, due to its stiffening function, prevents the elongation of the flexible corrugated tube under strain, which elongation might harm the connector and/or the cable to be protected therein.

According to a first possible embodiment, the coupler may be arranged on an outside of the fastener body. In this arrangement, the coupler is easily accessible from the outside, which facilitates the attachment of the body to the housing. The coupler may be arranged on an attachment area of the body that faces transverse, for example perpendicular, to the axial direction. Such arrangement improves the strain resistance of the coupler because it couples/attaches the fastener body to the housing transverse to the direction of a pulling force - acting along the axial direction - and thus can better withstand and compensate these forces.

In a further embodiment, the coupler and the body retainer are both arranged on the attachment area of the fastener body, which allows a very compact design. The coupler and the retainer may face in opposition directions with respect to the attachment area, for example the coupler and the retainer may be arranged on the opposite sides of the same wall of the fastener body. Further, the coupler and the body retainer may be arranged at the same position along the axial direction, along the deviate strain forces, transmitted from pulling on the tube, over the body retainer, principally directly into the coupler and the housing.

In a further embodiment, the coupler may be a form-fitting restraint for a repeatedly releasable joint with the housing. This type of joint achieves a secure connection between the coupler and the housing due to the form-fitting connection of the restraint with the corresponding counter-coupler on the housing, e.g. a lug or pin placed in a receptacle, while at the same time achieving an easy installation and maintenance of the connector due to the repeatedly releasable joint allowing to engage and disengage the form-fitting restraint from its corresponding counter-coupler on the housing if necessary.

In a further embodiment, the coupler may be formed as a latch, which allows for an easy attachment of the body to the housing, and is easy to design in a compact form. In a further embodiment, the coupler may comprise an attachment protrusion extending transverse to the axial direction, so it can be brought into abutment with the housing in the axial direction easily, resulting in a very strain-resistant attachment of the fastener body to the housing against pulling the corrugated tube in the axial direction.

In yet a further embodiment, the coupler may be elastically deflectable. The coupler may be elastically deflectable perpendicular to the axial direction. Such coupler or the engaging element thereof, e.g. the form-fitting restraint and/or the latch, to be easily moved from a locking position in which it may engage with a counter coupler on the housing, into a coupling/decoupling position, allowing to move the fastener relative to the housing in order to assembly and/or disassemble these two elements.

In the following, various embodiments with respect to the body retainer of the fastener are presented. The individual embodiments of the body retainer may be arbitrarily combined among each other as well as with any other aspects of the fastener according to the present invention.

In one embodiment, the body retainer comprises a locking protrusion extending into a transit of the fastener body extending in the axial direction for receiving at least part of the tube. This allows for a very compact design of the fastener because the locking protrusion that is to be inserted into the corrugation of the tube for fixing the body in the axial direction of the tube extends into that part of the body, namely the transit, which is designed for receiving the tube.

According to a further embodiment, the body retainer may encircle the transit, which transit may for example be a though-hole, so a cross-section of the tube can be completely received in the transit. When the body completely surrounds the tube, it provides a border in each direction transverse to the axial direction, and the body encircling the transit together with the retainer secures the tube in each direction, namely in the axial direction by means of the retainer, as well as in other directions due to the body completely encircling a tube placed in a transit of said body.

According to a further embodiment, the body retainer may be formed at an inner surface of the body that faces into the transit. This is a very compact design because the body retainer is arranged immediately where the tube extends, namely in the transit.

In another embodiment, the body retainer may comprise at least one rib. The design of the rib improves the area of engagement between the body retainer and the corrugation of the tube in an easy to design manner by way of matching the design of the body retainer to the groove-like corrugation of the tube, into which it is inserted. The fixing of the body in the axial direction of the tube may be improved in an embodiment, according to which the body retainer comprises a series of ribs that are spaced apart from each other in the axial direction. The distance between adjacent ribs may be aligned with and correspond to the distance between corrugations on the tube, or a multiple of this distance. The rib or the series of ribs may be designed in the form of a circle, a segment of a circle or a segmented circle, i.e. a circle with intersections, allowing for example to be inserted in a corrugation of the tube on opposing sides, with respect to the axial direction, this way *"clamping"* the corrugated tube to the body retainer from opposite sides of the tube.

According to a further embodiment, each body part may comprise an alignment element for guiding the correct assembly to the fastener body. This design facilitates the assembly of the body and ensures that each body part is correctly placed with respect to the other body parts. For example, a body part may comprise an alignment face having projections and/or recesses, complementary to corresponding projections/recesses on another body part. The alignment elements may be hermaphroditic, i.e. comprise complementary paired identical parts.

In a further embodiment, a joint may connect the body parts. The joint may be a hinge-joint, such as an integrated joint, which is cost-efficient and easy to manufacture and facilitates assembly of the body parts of the assembled fastener body. Of course, an integrated joint is only one example of how the individual body parts may be captively integrated, without limiting the present invention thereto.

In the further embodiments, the individual body parts are separate elements, wherein each assembling surface of each body part, on which it is brought into alignment with the corresponding body part in the assembly of the fastener body, is provided with an alignment element. Designing the distinct aligning areas of the body parts individually distinctive, i.e. with a unique alignment element that may be assembled with a corresponding counter element only in one specific way, avoids an incorrect assembling of the fastener body. For keeping the body parts in the assembled state, a lock may be provided. The lock may be either integrated on one or all of the body parts or be a separate individual element.

In one embodiment, the body may be composed of two half-shell body parts. These half-shells may be identical, which minimizes the number of elements necessary to assembly the fastener body.

According to a further embodiment, the coupler and/or the body retainer may be formed integrally with the body, resulting in a one-piece fastener that is easy to handle and minimizes the effort for its production.

In the following, embodiments of the sealing element of the assembly according to the present invention are described.

The sealing retainer of the sealing element may be of the same or similar design to the body retainer. For example, the seal retainer may comprise an arresting protrusion extending into the passage. Further, the seal retainer may be formed on an inner surface of the sealing sleeve that faces into the passage. Moreover, the seal retainer may comprise at least one rib, preferably a series of ribs that are spaced apart from each other in an axial direction.

In a further embodiment, the sealing element may comprise at least one outer lamella. The outer lamella may be brought into fluid-tight contact with a sealing surface of the housing. Similar to the rib or series of ribs of the seal retainer which may face into the passage and as such engage with and form a fluid-tight seal with the corrugated tube, the outer lamella may seal the sealing element against the sealing surface of the housing. In a further embodiment, the sealing element may comprise a series of outer lamellas that may be spaced apart from each other in the axial direction. Each of the outer lamellas and/or sealing ribs forms a sealing barrier, this way increasing the number of sealing barriers that a contaminant must pass before reaching the inside of the housing and hence improving the sealing efficiency of the sealing element according to the present invention.

In a further embodiment of the sealing element, the sealing sleeve thereof may be elastically extendable. Such elasticity allows a part of the tube to be received in the passage of the sealing sleeve. In one embodiment, the sealing sleeve is extendable perpendicular to the axial direction, so the inner width of the passage can be widened, thus facilitating the insertion of the corrugated tube. Moreover, the sealing sleeve may be designed such that the inner width of the sealing sleeve is, in its resting (i.e. non-extended) position, equal to or smaller than the outer width of the part of the tube that is to be received within the passage. After elastically extending the sealing sleeve, thus widening the inner width and introducing the tubing, the sealing sleeve contracts and applies a contraction force towards the centre of the tube, which forces the seal retainer into the corrugation of the tube.

In one embodiment, the sealing sleeve completely surrounds the tube, which allows the seal retainers to be equally distributed around the circumference of the corrugated tube, this way increasing the retention force resulting from the seal retainer inserted in the corrugation.

According to a further embodiment, the sealing element may comprise a stopper for abutting on an end face of the tube and avoiding that the sealing element is slipped further on the corrugated tube than intended. The stopper restricts and limits the insertion of the tube inside the passage of the sealing sleeve. The stopper also facilitates insertion of the seal retainers into the corrugations in case the distance between the stopper and the seal retainer corresponds to the distances between the corrugation of the tube and the abutting end face thereof.

In one further embodiment, the stopper reduces the inner width of the passage. A stopper reducing the inner width of the passage facilitates abutment with the corrugated tube. The stopper may be arranged on one axial end of the passage. A collar may form the stopper, which design provides an even distribution of the stopper around the axial axis in a manner reducing the inner width of the passage. By arranging the stopper on an axial end of the passage, the sealing takes the design the cap, which can be placed over one end of the corrugated tube, which facilitates the correct positioning of the sealing element on the corrugated tube. Here, the sealing element may seal in axial direction against the housing as well.

In order to reduce the parts of the sealing element according to the present invention, the seal retainer and/or the stopper, such as a collar forming the stopper, may be integrally formed on the sealing sleeve. As already discussed above with respect to the body retainer, the seal retainer and/or the stopper may encircle the passage around the axial direction, this way evenly distributing the engagement of the seal retainer in the corrugation of the tube and/or the abutment of the tube against the stopper, respectively. The outer lamella may surround the outer circumference of the sealing element, hence providing a complete seal in the axial direction. The same may apply for the sealing ribs as well.

In the following, preferred embodiments of the corrugated tube of the assembly according to the present invention are discussed. As with the above preferred embodiments of the fastener and the sealing element, the features of the preferred embodiments of the corrugated tube may be arbitrarily combined with each other as well as, in the assembly of the present invention, any possible embodiment of the fastener of the present invention and the sealing element of the present invention.

In a first embodiment of the corrugated tube, the reinforcement element runs along the axial direction of the tube, this way achieving an even distribution of the stiffening reinforcement element over the longitudinal axis, i.e. the axial direction of the tube, and dissipating a traction force along the whole length of the corrugated tube. The reinforcement element may wind along the axial direction, thus improving the total length of the reinforcement element on the tube.

In one embodiment, the reinforcement element may comprise a reinforcement ridge. Said ridge might run along the longitudinal axis, i.e. the axial direction of the tube. A ridge is easy to design and efficiently allows a stiffening of the corrugated tube over its whole length. Of course, more than one reinforcement element, for example a plurality of reinforcement ridges, may be provided that may be evenly distributed around the circumference of the corrugated tube. Thus, traction forces are deflected not only along the axial direction, but also evenly around the tube's circumference. In one embodiment, the corrugated tube may comprise two reinforcement elements, for example designed as reinforcement ridges, which are arranged on opposite sides of the tube. The two reinforcement ridges may be arranged diametrically opposed on the corrugated tube. Using two reinforcement ridges on opposite sides of the tube is advantageous because bending of such tube is possible only in a bending defined plane.

In a further embodiment, the reinforcement element may intersect the corrugations. As the corrugations usually represent tube sections having a weakened tensile strength, this weakening is disconnected at the intersection of the reinforcement element and the elongation of the tube at the corrugation is avoided due to stiffening the tube at the corrugations by the intersecting reinforcement element.

In a further embodiment, the corrugations may be designed as circumferential grooves that are interrupted, wherein the interruptions of the grooves may be in alignment in the axial direction, said alignment providing a continuous stiffened zone along the axial direction of the tube. In a further embodiment, the aligned intersections may form the reinforcement ridge discussed above. The reinforcement element, such as a reinforcement ridge, may be integrally formed with the tube, or may be arranged on or incorporated in the tube's body.

With respect to the assembly according to the present invention for sealingly coupling a housing on a corrugated tube, this assembly may comprise at least one, preferably all of the fasteners, according to the present invention as described above, a sealing element of the present invention as described above, and a corrugated tube according to an embodiment of the invention as described above. The assembly may moreover comprise a housing, for a connector housing or an adapter housing, comprising a counter coupler that can be joined with the coupler of the fastener according to the present invention and/or a sealing surface, against which the outer lamella and/or the stopper, like the collar of the sealing sleeve of the sealing element, may be pressed in a fluid-tight manner.

The present invention will be described in more detail by way of example hereinafter with reference to the accompanying drawings, which illustrate advantages embodiments of the present invention. The described embodiments are only possible configurations on which the individual features may, however, as described above, be implemented independently of each other or be omitted. Corresponding elements illustrated in the drawings are provided with the same reference signs. Parts of the description relating to the same elements in different drawings are omitted.

In the drawings:
- Fig. 1: shows a perspective representation of a connector assembled by an assembly for a connector according to the present invention comprising a corrugated tube, a sealing element and a fastener according to the present invention;
- Fig. 2: shows an exploded view of the connector housing of the connector, the sealing element, the fastener and one end of the corrugated tube, from the embodiment shown in Fig. 1, in an exploded view prior to assembly of the connector;
- Fig. 3a: shows a top view on the sealing element of Fig. 2, perpendicular to the axial axis;
- Fig. 3b: shows a front view of the sealing element of Fig. 2 in axial direction;
- Fig. 3c: shows a perspective view of the sealing element of Fig. 2;
- Fig. 4a: shows a perspective view on the inner side with a transit of a body part from the fastener shown in Fig. 2;
- Fig. 4b: shows a side view of the body part from Fig. 4a, perpendicular to the axial axis;
- Fig. 4c: shows a front view of the body part of Fig. 4a shown in axial direction;
- Fig. 4d: shows a perspective view on the outside of the body part of Fig. 4a;
- Fig. 4e: shows a further perspective view of the inner side with the transit of the body part, shown in Fig. 4a;
- Fig. 4f: shows a bottom view of the body part of Fig. 4a perpendicular to the axial axis;
- Fig. 5: shows the connector and with the connector housing of Fig. 2 in a perspective view, wherein the fastener according to the present invention and the sealing element are mounted on one end of the corrugated tube, prior to attaching the connector housing to the fastener;
- Fig. 6: shows a perspective view of the end of the connector with the connector housing of Figs. 2 and 5 in the assembled state, which represents an enlarged sectional view of the right side of Fig. 1;
- Fig. 7: shows a longitudinal cross sectional view along intersection line A-A in Fig. 5, with the fastener according to the present invention as well as the sealing element as mounted on one end of the corrugated tube, prior to attaching the connector housing to the fastener;
- Fig. 8: shows a longitudinal cross sectional view along intersection line B-B of Fig. 6 showing the connector with the connector housing as sealingly coupled to the corrugated tube via the fastener and the sealing element according to the assembly of the present invention;
- Fig. 9: shows an enlarged view of the left side of the connector according to Fig. 1 with the tube adaptor assembled on one end of the corrugated tube; and
- Fig. 10: shows a longitudinal cross-section of Fig. 9 along intersection line C-C.

In the following, the assembly for sealingly coupling a housing, such as a connector housing or an adaptor housing, on a corrugated tube in an exemplary embodiment is described with reference to the drawings. The figures also show an assembled assembly according to the present invention representing a connector, with all elements of the assembly, namely a fastener, a sealing element, a corrugated tube as well as a housing, in one exemplary embodiment.

### In detail:

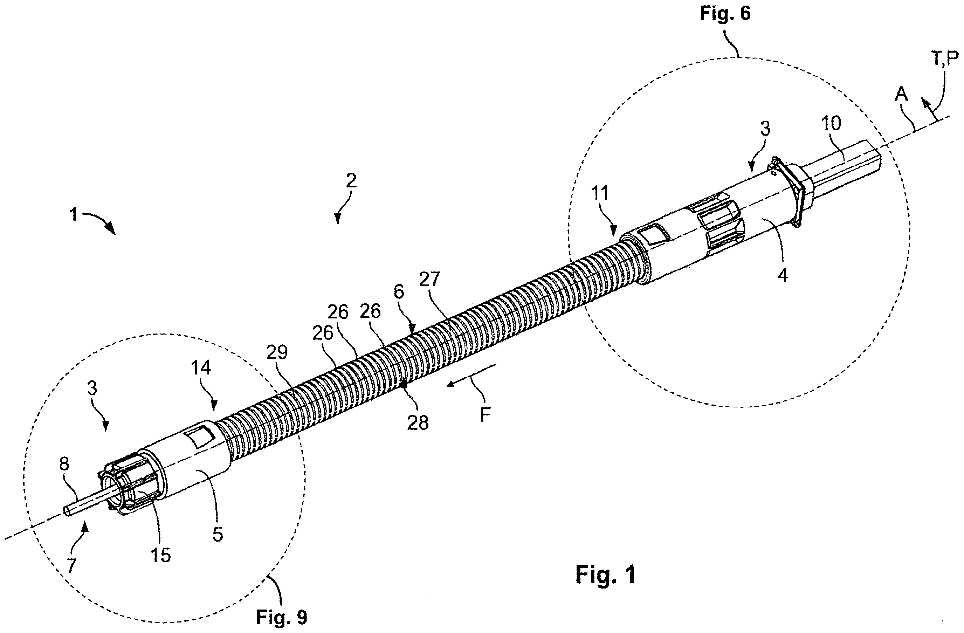

Fig. 1 shows a perspective view of a connector 1 according to an exemplary embodiment. The connector 1 is composed on an assembly 2 for sealingly coupling a housing 3, such as a connector housing 4 and an adaptor housing 5, on a corrugated tube 6.

The corrugated tube 6 protects a cable 7, like a data and/or power transmission cable, such as for example an optical fibre cable, comprising a data and/or power transmission line 8, which runs essentially along the axial direction A (also referred to as the longitudinal direction) inside the interior 9 of the corrugated tube 6 and terminates in a cable terminator 10 that is to be connected to a counter element, such as for example a female connector (not shown).

The corrugated tube 6 protects the cable 7, in particular the transmission line 8 thereof against harmful environmental impact, such as shock, dirt, strain, moisture or other corrosive substances.

On one end 11 of the corrugated tube 6, where the cable terminator 10 is arranged, the connector housing 4 is sealingly coupled on the corrugated tube 6 by means of a sealing element 12 and a fastener 13. Once the cable terminator 10 is connected to its corresponding female connector, the connector housing 4 may be connected to the box with the female connector (not shown). In this way, the cable 7 is protected by the connector 1 against harmful environment, while remaining flexibility, in particular in the transverse direction T, including the perpendicular direction P with respect to the axial direction A.

The other end 14 of the corrugated tube 6 is sealingly coupled, in a similar manner via a fastener 13 and a sealing element 12 according to the present invention, to an adaptor housing 5. On the adaptor housing 5, a screw cap 15 is mounted in axial direction A, which screw cap 15, as will be explained in more detail below, compresses a gland 16 around the transmission line 8, thus clamping the cable 7 and providing a strain relief. A tensile force acting along the axial direction A on the cable 7 is thus deflected into the adaptor housing 5, and via the corrugated tube 6, the connector housing 4 to the box (not shown) where the connector housing 4 is mounted.

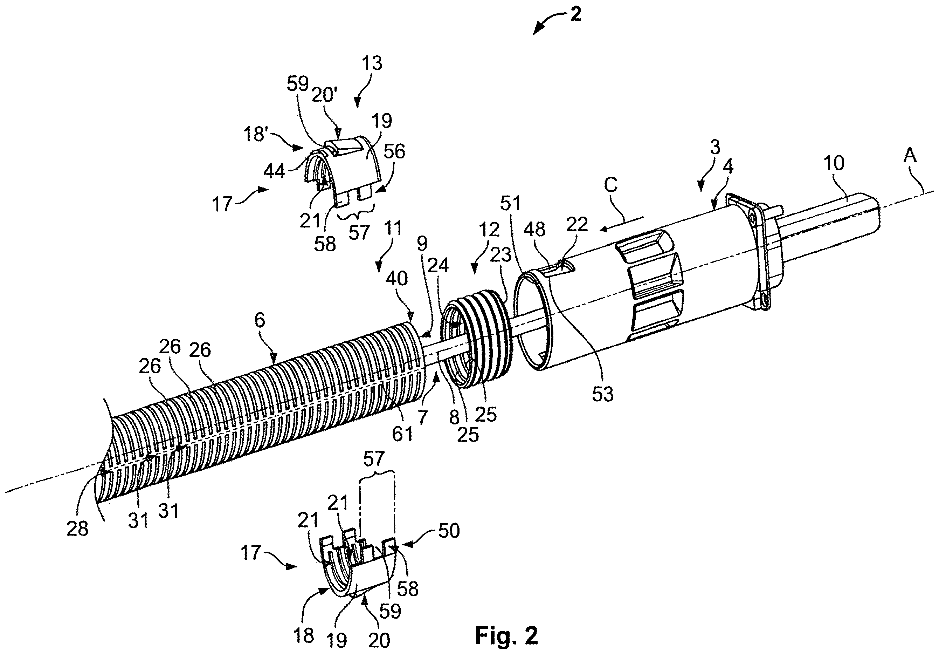

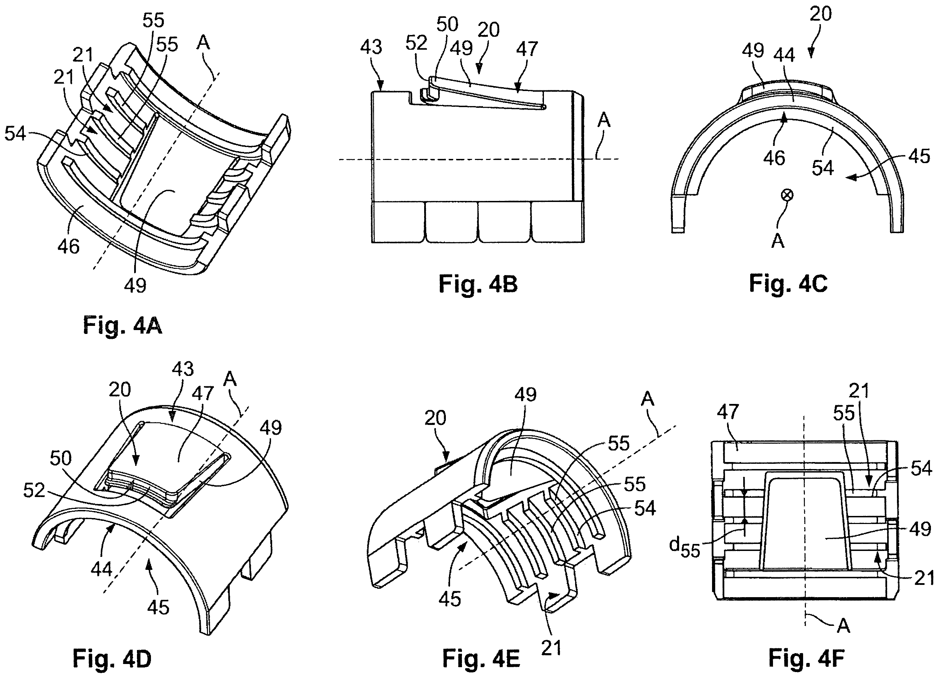

Fig. 2 shows an exploded, perspective view of the one end 11 of the corrugated tube 6, onto which the connector housing 4 is sealingly coupled via a fastener 13 as well as a sealing element 12. In the shown embodiment, which will be explained below in more detail with respect to Figs. 4A to 4F, the fastener 13 comprises a fastener body 17 that is composed of two body parts 18, 18'. In the shown embodiment, the body parts 18, 18' are identical body half-shells 19.

The fastener body 17 further comprises a coupler 20 for attaching the body 17 to the connector housing 4, and a body retainer 21 that can be inserted into a corrugation 26 for fixing the fastener body 17 in the axial direction A on the corrugated tube 6. Each of the body parts 18, 18' in the shown embodiment the identical half-shells 19, is provided with a coupler 20 and a plurality of body retainers 21. The connector housing 4 comprises a counter coupler 22 that can be joined with the coupler 20 of the fastener 13 in a manner fixing the connector housing 4 to the fastener 13.

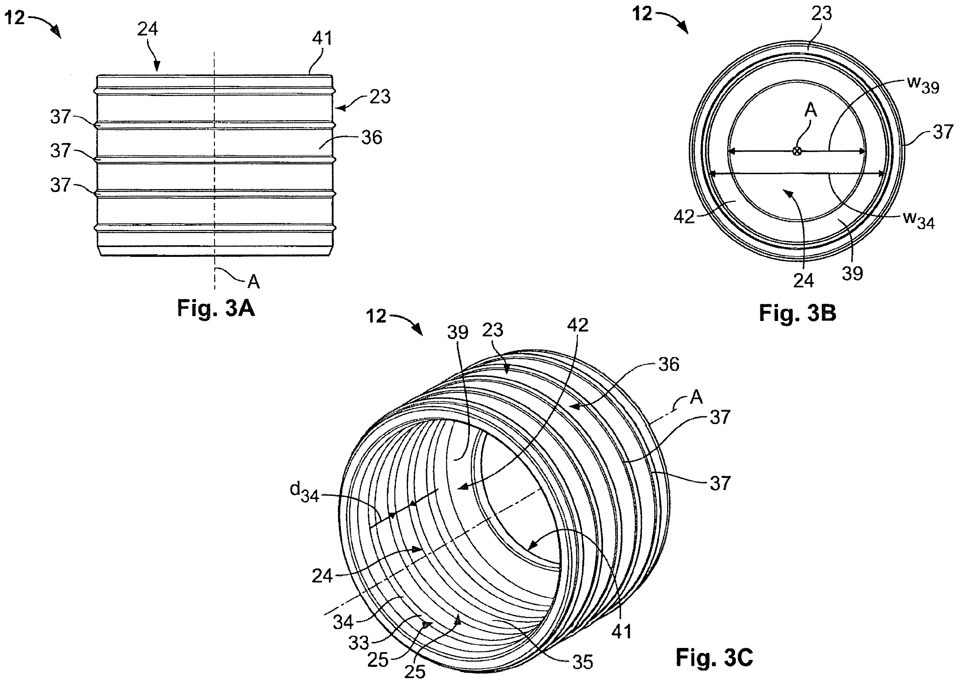

The sealing element 12 for sealing the corrugated tube 6 against the housing 3 comprises a sealing sleeve 23 having a passage 24 extending in the axial direction A of the sealing sleeve 23. The passage is described for receiving a part, here the one end 11 of the corrugated tube 6. The sealing element 12 furthermore comprises a seal retainer 25 that can be inserted into a corrugation 26 of the corrugated tube 6 for fixing the sealing element 12 in the axial direction A on the corrugated tube 6. The sealing element 12 will be described in more detail with respect to Figs. 3A to C below.

In the following, the corrugated tube 6 according to the exemplary embodiment of the present invention shown in the figures is described in more detail:
The corrugated tube 6 for protecting a cable 7 comprises a plurality of corrugations 26 on the outside 27 of the tube 6, and a reinforcement element 28 that stiffens the tube 6 in its axial direction A. Stiffening the tube 6 in its axial direction A means that the reinforcement element(s) 28 provide strain resistance against a tension force F acting in the axial direction A along the corrugated tube 6, this way preventing the elongation of the tube 6 in the axial direction A.

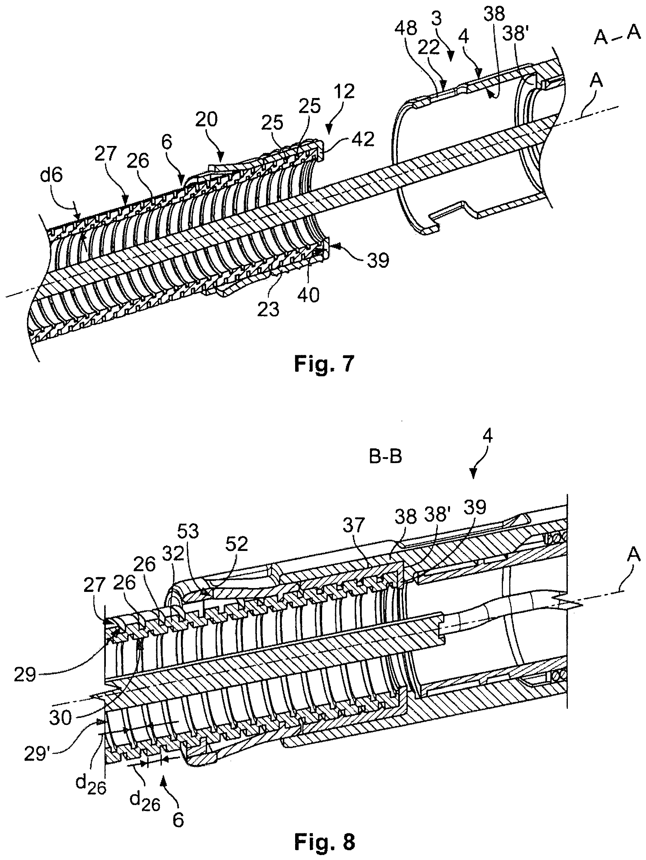

On the outside 27, the corrugated tube 6 is provided with a plurality of corrugations 26. The corrugations 26 are designed as grooves 29 that run substantially in the perpendicular direction P (or in a plane perpendicular o the axial direction A) along the outside 27 of the tube 6 in circles. The adjacent corrugations 26 are parallel and are spaced apart from each other at the same distance d₂₆. On the inside 30 (see e.g. Fig. 8) of the corrugated tube 6, a similar series of parallel grooves 29' is arranged. The grooves 29' at the inside 30 of the tube 6 are likewise spaced apart from each other at a distance d₂₆ and run, in the perpendicular direction P, as parallel, circular grooves 29'. With respect to the axial direction A, the grooves 29 on the outside 27 of the tube 6 and the grooves 29' on the inside 30 of the tube 26 are offset, providing the corrugated tube 6 with good flexibility in the transverse direction T.

The reinforcement element 28, in the shown embodiment, runs along the axial direction A of the tube 6. In the shown embodiment, the reinforcement element 28 is formed integrally with the tube 6 as explained in detail in the following. Alternatively, a separate reinforcement element 28, such as a reinforcement strip or bend, may be arranged on the outside 27 and/or the inside 30 of the tube 6, or may be incorporated into the tube 6 itself.

In the shown embodiment, the reinforcement element 28 intersects the corrugations 26 on the outside 27 of the tube 6. That is, the circular grooves 29 on the outside 27 do not completely encircle the circumference of the tube 6. At defined positions, each circular groove 29 is intersected at interruptions 31, regions where the tube body 32 has its complete tube thickness d₆ from the outside 27 to the inside 30 of the tube 6. The interruptions 31 of the grooves 29 are in alignment in the axial direction A. This way, a reinforcement ridge 61 is formed that runs along the axial direction A. The reinforcement ridge 61 is that section of the tube 6 using its complete tube thickness d₆ at the positions, where the enforcement elements 28 intersect the corrugations 29, i.e. where the interruptions 31 are in alignment in the axial direction A.

In the figures attached herewith, only one reinforcement element 28 is shown. Of course, a plurality of reinforcement elements, all of which may run along the axial direction A and are, for example evenly distributed around the circumference of the tube 6, can be provided. The reinforcement element 28 prevents elongation of the corrugated tube 6 in the axial direction A, while at the same time keeping the flexibility of the tube in the transverse direction T.

In the following, an exemplary embodiment of the sealing element 12 is described in detail with respect to Figs. 3A to 3C.

The sealing element 12 for sealing the corrugated tube 6 against the housing 3 comprises a sealing sleeve 23 having a passage 24 extending in the axial direction A of the sleeve 23 for receiving one 11 or the other end 14 of the tube 6.

The sealing element 12 further comprises a plurality of seal retainers 25 that can be inserted into a corrugation 26 of the tube 6 for fixing the sealing element 12 in the axial direction A on the tube 6. The seal retainers 25 comprise an arresting protrusion 33 extending into the passage 24. The arresting protrusion 33, which in the shown exemplary embodiment is designed as a circular arrestment rib 34, elevates from the inner surface 35 of the sealing sleeve 23 and protrudes in the perpendicular direction P into the passage 24.

In the shown embodiment, the seal retainer 25 comprises a series of arrestment ribs 34 that are arranged parallel with each other on the inner surface 35 and are spaced apart from each other at a distance d₃₄, which distance d₃₄ corresponds to the distance d₂₆ between the corrugations 26. The design of the seal retainers 25, in the shown embodiment, the arresting protrusions 33 designed as arrestment ribs 34, match the shape of the groove 29 formed on the outside 27 of the corrugated tube 6. When the arrestment ribs 34, forming the seal retainers 25 of the sealing element 12, are placed inside the groove 29 that constitutes the corrugations 26 of the tube 6, the ribs 34 are in abutment with the grooves 29 and thus fix the sealing element 12 in the axial direction A on the tube 6.

On its outer surface 36, the sealing sleeve 23 is provided with outer lamellas 37. The lamellas 37 protrude from the outer surface 36, similar to the arrestment ribs 34 on the inner surface 35. The lamellas 37 can be brought into fluid-tight contact with a sealing surface 38 of a housing, such as the connector housing 4 and the adapter housing 5, and may thus form a fluid-tight seal between the corrugated tube 6 and the housing 3. The lamellas 37 are spaced apart from each other in the axial direction A and each of the outer lamellas forms a sealing barrier that a contaminant must penetrate before reaching the inside of the housing 3.

The sealing sleeve 23 of the shown embodiment may be elastically extendable, allowing it to receive one end 11, 14 of the corrugated tube 6, for example by extending the sleeve perpendicular to the axial direction A, and then placing the end 11, 14 of the tube 6 inside the passage 24 of the sealing sleeve 23. In the shown embodiment, the inner width w₂₄ of the passage is slightly smaller than the outer width w₆. Due to the elastically extendable property of the sealing sleeve 23, the sleeve may contract and apply a contraction force towards the passage 24 of the sleeve 23, this way pressing the seal retainers 25 into the corrugations 26.

The sealing sleeve 23 completely surrounds the tube 6 and allows the seal retainers 25 to be equally distributed around the circumference of the corrugated tube 6, in a manner increasing the retention force resulting from the seal retainers 25 inserted in the corrugations 26.

In the shown embodiment, the sealing element 12 is provided with a stopper 39 for abutting on the end face 40 of the tube 6 and avoiding that the sealing element 12 is pushed, in the axial direction A, further on the corrugated tube 6 than intended. The stopper restricts and limits the insertion of the tube 6 inside the passage 24 by reducing the inner width w₂₄ of the passage 24, with view in the axial direction A:
In the shown embodiment, the stopper 39 is arranged on one axial end 41 of the stopper 39 in the form of a collar 42 surrounding the whole circumference of the passage 24. The inner width w₃₉ of the stopper 39 is smaller than the inner width w₂₄ of the passage 24. The sealing sleeve 23 with the collar 42 on one axial end 41 thereof gives the sealing element 12 the design of a cap which can be placed over one end 11, 14 of the tube 6.

In the shown embodiment, the sealing element 12 is integrally formed, i.e. as one piece with its sealing sleeve 23, seal retainers 25, lamellas 37 and stopper 39. When the sealing sleeve 23, for example as arranged in Fig. 2, is placed over the end face 40 of the tube 6, the seal retainers 25 are inserted into the corrugations 26 on the outside 27 of the tube, and the collar 42 forming the stopper 39 of the sealing element 12 abuts against the end face 40 of the tube 6. This way, the sealing element 12 covers the one end 11 of the tube in the axial direction A by means of the stopper 39 as well as perpendicular thereto by the sealing sleeve 23, as can be seen in Fig. 7. This way, the stopper 39 may seal against a shoulder 38' of the housing 3 in the axial direction A.

In the following, the shown exemplary embodiment of a fastener according to the present invention is described, in particular with respect to Figs. 2, 4a to 4f, 5 and 7.

The fastener 13 comprises a fastener body 17. In the shown embodiment, the fastener body 17 comprises two body parts 18, 18' that can be assembled to the body 17. In the shown embodiment, the two body parts 18, 18' are identical body half-shells 19. One of the body half-shells 19 is shown, from different angles, in Figs. 4a to 4f and will be described in the following.

The half-shell 19 comprises a coupler 20 for attaching the body 17/each body part 18/18' to the housing 3, and a plurality of body retainers 21 that can be inserted into a corrugation 26 of the tube 6 for fixing the body 17 in the axial direction A on the tube 6. The coupler 20 is arranged on an outside 43 of the fastener body/its half-shell 19. In the shown embodiment, the coupler 20 is arranged on an attachment area 44 of the fastener body 17. The attachment area 44 runs perpendicular to the axial direction A. The attachment area 44 is that part of the fastener body 17, where the coupler 20 and, in the exemplary embodiment, also the body retainers 21, are arranged. The coupler 20 and the body retainers 21 face in opposite directions with respect to the attachment area 44, that is, the coupler 20 is arranged on the outside 43 and faces, in the assembled state, away from the corrugated tube 6/the transit 45 of the fastener body 19, whereas the body retainers 21 are arranged on the inside 46 of the fastener body 17. The coupler 20 and the body retainers 21 are arranged at the same position along the axial direction A.

In the shown embodiment, the coupler 20 is a form-fitting restraint 47 for a joint with the housing 3, such as the connector housing 4 and the adapter housing 5. In the shown exemplary embodiment, the form-fitting restraint 47 is designed for a repeatedly releasable joint with the housing 3. The exemplary repeatedly releasable joint comprises, on the housing 3, a counter-coupler 22, designed as a receptacle 48, into which the coupler 20, designed as a latch 49 in the shown embodiment of the fastener 13, may be received in a manner fixing the fastener 17 in the axial direction A on the housing 3.

The coupler 20, such as a latch 49, may comprise an attachment protrusion 50 extending transverse to the axial direction A, so that it can be brought into abutment with the housing 3 in general, i.e. with the counter-coupler 22 designed as a receptacle 48 in the exemplary embodiment shown in the figures.

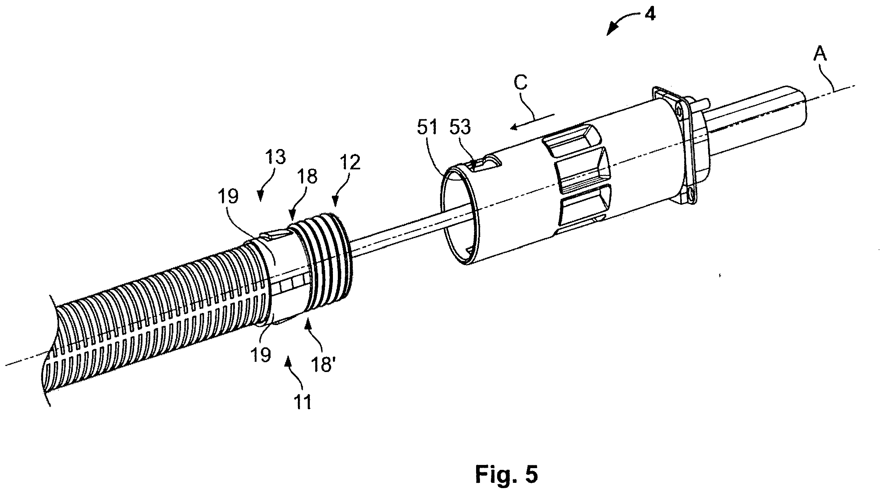

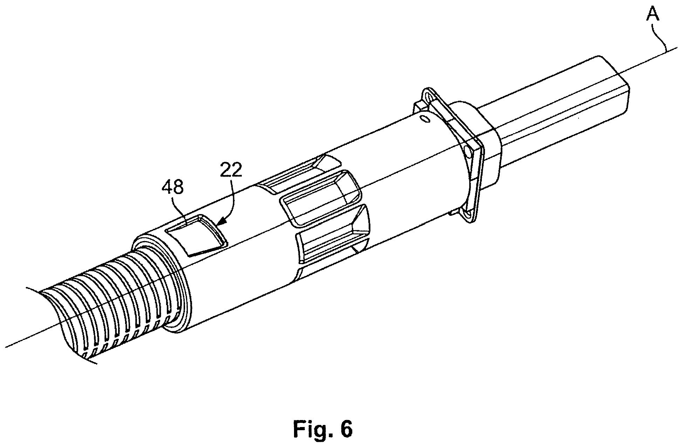

The coupler 20 of the shown embodiment is elastically deflectable in the transverse direction T. When for example a connector housing 4, as shown in Fig. 5, is moved in a coupling direction C along the axial axis A over the sealing element 12 and the fastener 13, the front end 51 of the housing slips over the outside 43 of the fastener body 17, until it runs into the elastically deflectable latch 49 that protrudes transverse to the axial direction A away from the transit 45 of the fastener body 17. The front end 51 of the housing 3 deflects the latch 49 towards the transit 45, i.e. into the plane of the attachment area 44 corresponding to the outside 43 of the fastener body 17, until the attachment protrusion 50 slips past the front end 51 of the housing 3 and is placed in the counter-coupler 22, i.e. the receptacle 41 in the housing. There, the latch 49 springs back due to its elastic deflectability into its original position, fixing the housing 4 on the fastener 13 against pulling of the fastener 13 in a direction opposite to the coupling direction C. In this position, shown in Figs. 6 and 8, for example, engagement elements, like fixation walls 52 of the attachment protrusion 50 come into abutment with the border 53 of the receptacle 48 in the axial direction A.

In order to dismount the housing 4 from the fastener 13, the coupler 20, that is, the deflectable latch 49, is to be pressed in the perpendicular direction P towards the transit 45, this way releasing the engagement between the fixation wall 52 of the attachment protrusion 50 and the border 53 of the receptacle 48 in the axial direction A, so the housing 4 may be released against the coupling direction C from the fastener 13.

The body retainer 21 of the shown embodiment is designed quite similar to the seal retainers 25 of the sealing element 12. The body retainer 21 comprises a locking protrusion 54 that extends into the transit 45 of the fastener body 16, which transit 45 extends in the axial direction A and is designed for receiving a part of the corrugated tube 6. In the shown embodiment, the body retainers 21 encircle the transit 45. In the assembled state of the fastener 13 of the exemplary embodiment in the figures, as shown for example in Fig. 5, transit 45 is a though-hole in which a part of the tube 6 is completely received. This way, the fastener 13 completely surrounds the tube 6.

The body retainers 21 are formed on the inside 46 of the fastener body 17 facing into the transit 45. In the shown embodiment, the body retainers 21 are designed as a plurality of retainer ribs 55. The distance d₅₅ between adjacent retainer ribs 55 corresponds to the distance d₂₆ between the corrugations.

In the shown embodiment, the fastener body 17, more specifically each of the body half-shells 19, is integrally formed with the coupler 20 and the body retainer 21, designed as a series of retainer ribs 55. Both of the coupler 20 and the body retainers 21 are arranged in the attachment area 44 of the body half-shells 19. In the figures, the coupler 20 and the body retainer 21 are formed integrally with the body 17. In the exemplary design shown in the figures, the coupler 20, designed as a latch 49, designed as a tongue-like latch intersects the retainer ribs 55. The latch 49 is a section of the attachment area 44 which is partially cut out from the fastener body 17. This allows for a very compact design of the fastener 13 and bringing together, in the axial direction A, the coupler 20 for fixing the fastener 13 to the housing 3 and the body retainers 21 to be inserted into the corrugations 26 of the tube 6 for fixing the fastener 13 in the axial direction on the corrugated tube 6.

Two of the half-shells 19 depicted in Figs. 4a to 4f can, as can be seen for example in Figs. 2 and 5, be assembled to the fastener 13. By placing the two half-shells 19 at opposite sides with respect to the corrugated tube 6, the may be assembled to a fastener 13 having a substantially ring-like fastener body 17 composed of the two body parts 18, 18'. For ensuring a correct assembly of the body parts 18, 18', each body part comprises an alignment element 56. The alignment element 56 may comprise an alignment face 57 having alignment protrusions 58 and alignment recesses 59 that are complementary to each other, so an alignment protrusion 58 from one body part 18 may be placed into the corresponding alignment recess 59 of the corresponding body part, this way guiding and facilitating the assembly of the body parts 18, 18' to the fastener body 17. In the assembled state, which can be seen best in Fig. 5, the alignment protrusions 58 are placed in their corresponding alignment recesses 59 of the other body part. The allignment protrusions 58 of both body parts 18, 18' are arranged like interlocking adjacent teeth, in the axial direction, providing a form-fitting connection between the alignment elements 56 of the corresponding body parts 18, 18'.

When assembling the connector 1 according to the assembly of the present invention using a fastener 13 of the present invention, a sealing element 12, a corrugated tube 6 and a housing 3, the following steps are performed: First, the cable 7 is moved, with its cable terminator 10 first, through the corrugated tube 6 until the cable terminator 10, introduced in one end 14 of the tube 6, exits from the other end 11 of the tube 6. Next, the sealing element 12 is placed, in a coupling direction C, over the cable terminal 10, receiving the cable 7 in its passage 24. Subsequently, the sealing element 12 is placed on the end 11 of the tube 6 until it covers (see for example Figs. 5 and 7) the end 11 of the tube such that the stop 39 is in abutment with the end face 40 of the tube 6. The sealing sleeve 23 covers the end 11 of the tube, wherein the seal retainers 25 are inserted into the corrugations 26 on the outside 27 of the tube 6, this way fixing the sealing element 12 in the axial direction A on the tube 6.

Next, the fastener 13 is mounted adjacent to the sealing element of the end 11 of the tube 6 by assembling the two body parts 18, 18' such that the alignment elements 56 are matched by placing the alignment protrusions 58 of one body 18, 18' into the corresponding alignment recesses 59 of the other body part 18, 18'. In the course of this assembly, the body retainers 21 are inserted into corrugations 26 on the outside 27 of the tube, this way fixing the body 17 of the fastener 13 in the axial direction A on the tube 6 as well. This intermediate state of assembling is shown in Figs. 5 and 7.

Next, the connector housing 4 is moved, in the coupling direction C, over the sealing element 12 and the fastener 13, as already explained above, until the coupler 20 of the fastener 13 is arranged in engagement with the corresponding counter-coupler 22 of the housing 4, which final assembling position is shown for example in Figs. 6 and 8.

The assembly of the other end 14 of the corrugated tube 6 is performed similarly. In the shown embodiment, on the other end 14 of the corrugated tube 6, an adapter housing 5 is sealingly coupled with the corrugated tube 6. The adapter housing 5 serves to clamp the cable 7. To do this, a screw cap 15 is screwed, along the axial direction A, onto the adapter housing 5. A gland 16, having an inner bore 60, is placed such that the cable transmission line 8 is received in the bore 60 and, upon screwing the screw cap 15 on the adapter housing 5, the screw cap 15 compresses the gland 16, thereby clamping the transmission line 8 in the bore 60.

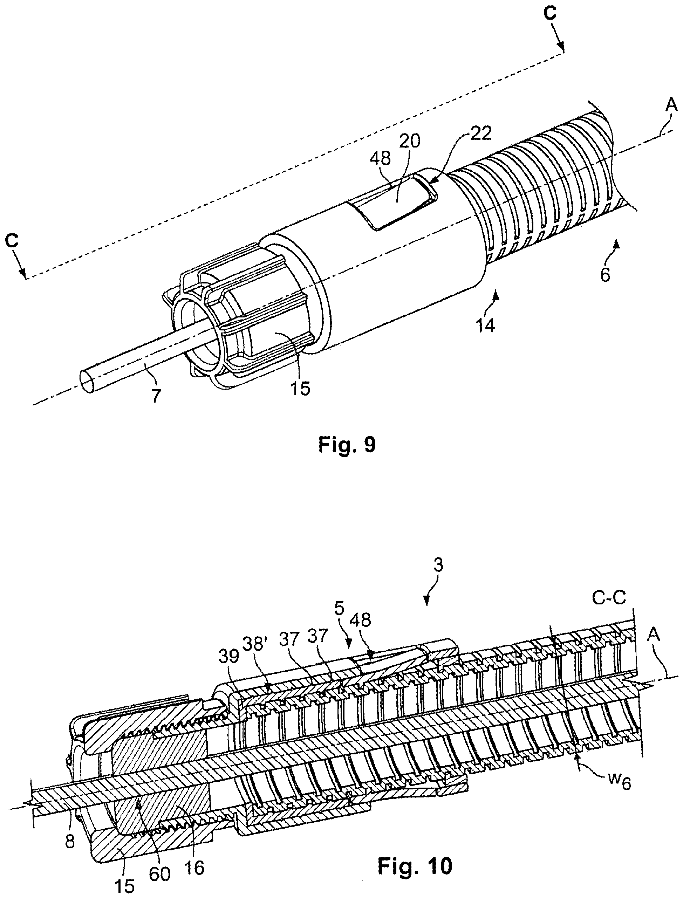

In this assembled state, shown for example in Figs. 8 and 10, the sealing element 12 seals the corrugated tube 6 against the housing 3, whereas the fastener 12 secures the housing 3 on the corrugated tube 6 because the coupler 20 of the fastener 13 is fixed, in the axial direction A, to the housing, and the body retainers 21 of the fastener 13 are fixed in the corrugations 26 of the corrugated tube 6 in the axial direction A as well.

The sealing element 12 seals against the housing 3 in the axial direction A by a fluid-tight sealing between the stopper 39 of the sealing sleeve 23, which is pressed against a sealing shoulder 38' in the housing. In the perpendicular direction P, the sealing element 12 is fluid-tight by pressing the outer lamella 37 against the sealing surface 38 of the housing 4.

### Reference Signs

- 1: Connector
- 2: Assembly
- 3: Housing
- 4: Connector housing
- 5: Adapter housing
- 6: Corrugated tube
- 7: Cable
- 8: Data/power transmission line
- 9: Interior of tube
- 10: Cable terminator
- 11: One end of tube
- 12: Sealing element
- 13: Fastener
- 14: Other end of tube
- 15: Screw cap
- 16: Gland
- 17: Fastener body
- 18, 18': Body parts
- 19: Body half-shell
- 20: Coupler
- 21: Body retainer(s)
- 22: Counter-coupler
- 23: Sealing sleeve
- 24: Passage of sealing sleeve
- 25: Seal retainer
- 26: Corrugation
- 27: Outside of tube
- 28: Reinforcement element
- 29, 29': Groove of corrugation
- 30: Inside of tube
- 31: Interruption
- 32: Tube body
- 33: Arresting protrusion
- 34: Arrestment rib
- 35: Inner surface of sealing sleeve
- 36: Outer surface of sealing sleeve
- 37: Outer lamella(e)
- 38: Sealing surface
- 38': Sealing shoulder
- 39: Stopper
- 40: End face of tube
- 41: Axial end of stopper
- 42: Collar
- 43: Outside of the fastener body/body half-shell
- 44: Attachment area
- 45: Transit
- 46: Inside of the fastener body/body half-shell
- 47: Form-fitting restraint
- 48: Receptacle
- 49: latch
- 50: Attachment protrusion
- 51: Front end of housing
- 52: Fixation wall
- 53: Border of receptacle
- 54: Locking protrusion
- 55: Retainer ribs of the fastener
- 56: Alignment element
- 57: Alignment face
- 58: Alignment protrusion
- 59: Alignment recess
- 60: Bore of gland
- 61: Reinforcement ridge

- A: Axial direction
- C: Coupling direction
- d₆: Tube thickness
- d₂₆: Distance between corrugations
- d₃₄: Distance between arrestment ribs
- d₅₅: Distance between retainer ribs
- F: Tension force
- P: Perpendicular direction
- T: Transverse direction
- w₆: Outer width of tube
- w₂₄: Inner width of passage
- w₃₉: Inner width of stopper

## Claims

1. Fastener (13) for coupling a housing (3), such as a connector housing (4) or an adapter housing (5), on a corrugated tube (6), comprising a fastener body (17), a coupler (20) for attaching the fastener body (17) to the housing (3) and at least one body retainer (21) that can be inserted into a corrugation (26) of the tube (6) for fixing the fastener body (17) in an axial direction A on the tube (6), wherein the fastener (13) comprises at least two body parts (18, 18') that can be assembled to the fastener body (17), and wherein each body part (18, 18') comprises a coupler (20) and a body retainer (21).

2. Fastener (13) according to claim 1, wherein the coupler (20) is a form-fitting restraint (47) for a repeatedly releasable joint with the housing (3).

3. Fastener (13) according to claim 1 or 2, wherein the coupler (20) comprises an attachment protrusion (50) extending transverse to the axial direction (A).

4. Fastener (13) according to any one of claims 1 to 3, wherein the coupler (20) is elastically deflectable (5).

5. Fastener (13) according to any one of claims 1 to 4, wherein the body retainer (21) comprises at least one of the following features:
- the body retainer (21) comprises a locking protrusion (54) extending into a transit (45) of the fastener body (17) extending in the axial direction (A) for receiving at least part of the tube (6);
- the body retainer (21) is formed at the inside (46) of the fastener body (17) that faces into the transit (45);
- the body retainer (21) comprises at least one retainer rib (55); and
- the body retainer (21) comprises a series of retainer ribs (55) that are spaced apart from each other in the axial direction (A).

6. Fastener (14) according to any one of claims 1 to 5, wherein each body part (18, 18') comprises an alignment element (56) for adjusting the correct assembly to the fastener body (17).

7. Assembly (2) for sealingly coupling a housing (3), such as a connector housing (4) or an adapter housing (5), on a corrugated tube (6), the assembly comprising a fastener (13) according to any one of claims 1 to 6, and at least one of:
- a sealing element (12) for sealing a corrugated tube (6) against a housing (3), such as a connector housing (4) or an adapter housing (5), comprising a sealing sleeve (23) having a passage (24) extending in an axial direction (A) of the sealing sleeve (23) for receiving a part of the tube (6) and a seal retainer (25) that can be inserted into a corrugation (26) of the tube (6) for fixing the sealing element (12) in the axial direction (A) on the tube (6); and
- a corrugated tube (6) for protecting a cable (7), comprising a plurality of corrugations (26) on the outside (27) of the tube (6), and a reinforcement element (28) stiffening the tube (26) in its axial direction (A).

8. Assembly (2) according to claim 7 comprising the sealing element (12), wherein the seal retainer (25) comprises at least one of the following features:
- the seal retainer (25) comprises an arresting protrusion (33) extending into the passage (24);
- the seal retainer (25) is formed at an inner surface (35) of the sealing sleeve (23) that faces into the passage (24); and
- the seal retainer (25) comprises at least one rib (34), preferably a series of ribs (34) that are spaced apart from each other in the axial direction A.

9. Assembly (2) according to claim 7 or 8 comprising the sealing element (12), which comprises at least one outer lamella (37).

10. Assembly (2) according to any one of claims 7 to 9 comprising the corrugated tube (6), wherein the reinforcement element (28) comprises at least one of the following features:
- the reinforcement element (28) runs along the axial direction (A) of the tube (6);
- the reinforcement element (28) intersects the corrugations (26);
- the reinforcement element (28) comprises a reinforcement ridge (61) running along the axial direction (A); and
- the reinforcement element (28) is integrally formed with the tube (6).

11. Assembly (2) according to any one of claims 7 to 10 comprising the corrugated tube (6), wherein the corrugations (26) are designed as circumferential grooves (29) that are interrupted, wherein the interruptions (31) of the grooves (29) are preferably in alignment in the axial direction (A), and wherein most preferably the alignment interruptions (31) form the reinforcement ridge (61).

12. Assembly (2) of any one of claims 7 to 11, further comprising a housing (3) having a counter-coupler (22) that can be joined with the coupler (20).

## Patentansprüche

1. Befestigungsvorrichtung (13) zum Koppeln eines Gehäuses (3), beispielsweise eines Verbindergehäuses (4) oder eines Adaptergehäuses (5), mit einem Wellrohr (6), umfassend einen Befestigungsvorrichtungs-Körper (17), ein Kopplungselement (20) zum Anbringen des Befestigungsvorrichtungs-Körpers (17) an dem Gehäuse (3) sowie wenigstens einen Körper-Halter (21), der in eine Welle (26) des Rohrs (6) eingeführt werden kann, um den Befestigungsvorrichtungs-Körper (17) in einer axialen Richtung A an dem Rohr (6) zu fixieren, wobei die Befestigungsvorrichtung(13) wenigstens zwei Körper-Teile (18, 18') umfasst, die an dem Befestigungsvorrichtungs-Körper (17) montiert werden können, und jeder Körper-Teil (18, 18') ein Kopplungselement (20) sowie einen Körper-Halter (21) umfasst.

2. Befestigungsvorrichtung (13) nach Anspruch 1, wobei das Kopplungselement (20) eine formschlüssige Rückhaltevorrichtung (47) für eine wiederholt lösbare Verbindung mit dem Gehäuse (3) ist.

3. Befestigungsvorrichtung (13) nach Anspruch 1 oder 2, wobei das Kopplungselement (20) einen Anbringungs-Vorsprung (50) umfasst, der sich quer zu der axialen Richtung (A) erstreckt.

4. Befestigungsvorrichtung (13) nach einem der Ansprüche 1 bis 3, wobei das Kopplungselement (20) elastische Biegbarkeit (5) aufweist.

5. Befestigungsvorrichtung (13) nach einem der Ansprüche 1 bis 4, wobei der Körper-Halter (21) wenigstens eines der folgenden Merkmale umfasst:
- der Körper-Halter (21) umfasst einen Verriegelungs-Vorsprung (54), der sich in einen Durchgang (45) des Befestigungsvorrichtungs-Körpers (17) hinein erstreckt, der in der axialen Richtung (A) verläuft, um wenigstens einen Teil des Rohrs (6) aufzunehmen;
- der Körper-Halter (21) ist an der Innenseite (46) des Befestigungsvorrichtungs-Körpers (17) ausgebildet, die in den Durchgang (45) hinein gewandt ist;
- der Körper-Halter (21) umfasst wenigstens eine Halter-Rippe (55); und
- der Körper-Halter (21) umfasst eine Reihe von Halter-Rippen (55), die in der axialen Richtung (A) voneinander beabstandet sind.

6. Befestigungsvorrichtung(14) nach einem der Ansprüche 1 bis 5, wobei jeder Körper-Teil (18, 18') ein Ausrichtungs-Element (56) zum Einstellen der korrekten Montage an dem Befestigungsvorrichtungs-Körper (17) umfasst.

7. Baugruppe (2) zum abdichtenden Koppeln eines Gehäuses (3), beispielsweise eines Verbindergehäuses (4) oder eines Adaptergehäuses (5), mit einem Wellrohr (6), wobei die Baugruppe eine Befestigungsvorrichtung(13) nach einem der Ansprüche 1 bis 6 sowie
- ein Dichtungselement (12) zum Abdichten eines Wellrohrs (6) an einem Gehäuse (3), beispielsweise einem Verbindergehäuse (4) oder einem Adaptergehäuse (5), das eine Dichtungshülse (23) mit einem Durchlass (24), der sich in einer axialen Richtung (A) der Dichtungshülse (23) erstreckt, um einen Teil des Rohrs (6) aufzunehmen, sowie einen Dichtungs-Halter (25) umfasst, der in eine Welle (26) des Rohrs (6) eingeführt werden kann, um das Dichtungselement (12) in der axialen Richtung (A) an dem Rohr (6) zu fixieren; oder/und
- ein Wellrohr (6) zum Schützen eines Kabels (7) umfasst, das eine Vielzahl von Wellen (26) an der Außenseite (27) des Rohrs (6) sowie ein Verstärkungselement (28) umfasst, das das Rohr (26) in seiner axialen Richtung (A) versteift.

8. Baugruppe (2) nach Anspruch 7, die das Dichtungselement (12) umfasst, wobei der Dichtungs-Halter (25) wenigstens eines der folgenden Merkmale umfasst:
- der Dichtungs-Halter (25) umfasst einen Arretier-Vorsprung (33), der sich in den Durchgang (24) hinein erstreckt;
- der Dichtungs-Halter (25) ist an einer Innenfläche (35) der Dichtungshülse (23) ausgebildet, die in den Durchgang (24) hinein gewandt ist; und
- der Dichtungs-Halter (25) umfasst wenigstens eine Rippe (34), vorzugsweise eine Reihe von Rippen (34), die in der axialen Richtung A voneinander beabstandet sind.

9. Baugruppe (2) nach Anspruch 7 oder 8, die das Dichtungselement (12) umfasst, das wenigstens eine äußere Lamelle (37) umfasst.

10. Baugruppe (2) nach einem der Ansprüche 7 bis 9, die das Wellrohr (6) umfasst, wobei das Verstärkungselement (28) wenigstens eines der folgenden Merkmale umfasst:
- das Verstärkungselement (28) verläuft in der axialen Richtung (A) des Rohrs (6);
- das Verstärkungselement (28) schneidet die Wellen (26);
- das Verstärkungselement (28) umfasst einen Verstärkungs-Steg (61), der in der axialen Richtung (A) verläuft; und
- das Verstärkungselement (28) ist integral mit dem Rohr (6) ausgebildet.

11. Baugruppe (2) nach einem der Ansprüche 7 bis 10, die das Wellrohr (6) umfasst, wobei die Wellen (26) als Umfangsnuten (29) ausgeführt sind, die unterbrochen sind, die Unterbrechungen (31) der Nuten (29) vorzugsweise in der axialen Richtung (A) ausgerichtet sind und die Unterbrechungen (31) der Ausrichtung am besten den Verstärkungs-Steg (61) bilden.

12. Baugruppe (2) nach einem der Ansprüche 7 bis 11, die des Weiteren ein Gehäuse (3) mit einem Gegen-Kopplungselement (22) umfasst, das mit dem Kopplungselement (20) verbunden werden kann.

## Revendications

1. Elément de fixation (13) pour coupler un logement (3), tel qu'un logement de connecteur (4) ou un logement d'adaptateur (5), sur un tube ondulé (6), comprenant un corps d'élément de fixation (17), un coupleur (20) pour la fixation du corps d'élément de fixation (17) sur le logement (3) et au moins un élément de retenue de corps (21) pouvant être inséré dans une ondulation (26) du tube (6) pour la fixation du corps d'élément de fixation (17) dans une direction axiale A sur le tube (6), dans lequel l'élément de fixation (13) comprend au moins deux parties de corps (18, 18') qui peuvent être assemblées au corps de l'élément de fixation (17), et dans lequel chaque partie de corps (18, 18') comprend un coupleur (20) et un dispositif de retenue du corps (21).

2. Elément de fixation (13) selon la revendication 1, dans lequel le coupleur (20) est un dispositif de retenue (47) à ajustement de forme pour un ensemble avec le logement (3) pouvant être libéré à plusieurs reprises.

3. Elément de fixation (13) selon les revendications 1 ou 2, dans lequel le coupleur (20) comprend une saillie de fixation (50) s'étendant transversalement à la direction axiale (A).

4. Elément de fixation (13) selon l'une quelconque des revendications 1 à 3, dans lequel le coupleur (20) est élastiquement déformable (5).

5. Elément de fixation (13) selon l'une quelconque des revendications 1 à 4, dans lequel le dispositif de retenue du corps (21) comprend au moins l'une des caractéristiques suivantes:
- le corps de retenue (21) comprend une saillie de verrouillage (54) s'étendant dans un passage (45) du corps de fixation (17) s'étendant dans la direction axiale (A) pour recevoir au moins une partie du tube (6);
- le dispositif de retenue du corps (21) est formé à l'intérieur (46) du corps de l'élément de fixation (17) qui fait face au transit (45);
- le dispositif de retenue du corps (21) comprend au moins une côte de retenue (55); et
- le dispositif de retenue du corps (21) comprend une série de nervures de retenue (55) qui sont espacées les unes des autres dans la direction axiale (A).

6. Elément de fixation (14) selon l'une quelconque des revendications 1 à 5, dans laquelle chaque partie du corps (18, 18') comprend un élément d'alignement (56) pour ajuster l'assemblage correct au corps de l'élément de fixation (17).

7. Ensemble (2) pour le raccordement étanche d'un logement (3), tel qu'un logement de connecteur (4) ou un logement d'adaptateur (5), sur un tube ondulé (6), l'ensemble comprenant un élément de fixation (13) selon l'une quelconque des revendications 1 à 6, et au moins l'une des revendications:
- un élément d'étanchéité (12) pour rendre étanche un tube ondulé (6) contre un logement (3), tel qu'un logement de connecteur (4) ou un logement d'adaptateur (5), comprenant un manchon d'étanchéité (23) ayant un passage (24) s'étendant dans une direction axiale (A) du manchon d'étanchéité (23) pour recevoir une partie du tube (6) et un dispositif de retenue de joint (25) qui peut être inséré dans une ondulation (26) du tube (6) pour fixer l'élément d'étanchéité (12) dans la direction axiale (A) sur le tube (6); et
- un tube ondulé (6) pour la protection d'un câble (7), comprenant une pluralité d'ondulations (26) sur l'extérieur (27) du tube (6), et un élément de renforcement (28) raidissant le tube (26) dans sa direction axiale (A).

8. Ensemble (2) selon la revendication 7 comprenant l'élément d'étanchéité (12), dans lequel le support de joint (25) comprend au moins une des caractéristiques suivantes:
- le dispositif de retenue de joint (25) comporte une saillie d'arrêt (33) s'étendant dans le passage (24);
- le dispositif de retenue de joint (25) est formé sur une surface intérieure (35) du manchon d'étanchéité (23) qui fait face au passage (24); et
- le dispositif de retenue du joint (25) comprend au moins une nervure (34), de préférence une série de nervures (34) qui sont espacées les unes des autres dans la direction axiale A.

9. Ensemble (2) selon les revendications 7 ou 8 comprenant l'élément d'étanchéité (12), qui comporte au moins une lamelle extérieure (37).

10. Ensemble (2) selon l'une quelconque des revendications 7 à 9 comprenant le tube ondulé (6), dans lequel l'élément de renforcement (28) comprend au moins l'une des caractéristiques suivantes:
- l'élément de renforcement (28) s'étend dans la direction axiale (A) du tube (6);
- l'élément de renforcement (28) croise les ondulations (26);
- l'élément de renforcement (28) comprend une arête de renforcement (61) s'étendant dans la direction axiale (A); et
- l'élément de renforcement (28) est formé d'un seul tenant avec le tube (6).

11. Ensemble (2) selon l'une quelconque des revendications 7 à 10 comprenant le tube ondulé (6), dans lequel les ondulations (26) sont conçues comme des rainures circonférentielles (29) qui sont interrompues, dans lequel les interruptions (31) des rainures (29) sont de préférence en alignement dans la direction axiale (A), et dans lequel de préférence les interruptions d'alignement (31) forment l'arête de renforcement (61).

12. Ensemble (2) selon l'une quelconque des revendications 7 à 11, comprenant en outre un logement (3) comportant un contre-coupleur (22) pouvant être relié au coupleur (20).
